(19) Europäisches Patentamt
European Patent Office
Office européen des brevets

(11) **EP 3 210 772 B1**

(12) **EUROPÄISCHE PATENTSCHRIFT**

(45) Veröffentlichungstag und Bekanntmachung des Hinweises auf die Patenterteilung:
**19.09.2018   Patentblatt 2018/38**

(21) Anmeldenummer: **16157226.8**

(22) Anmeldetag: **24.02.2016**

(51) Int Cl.:
*B32B 7/00* (2006.01)   *B32B 7/02* (2006.01)
*B32B 7/04* (2006.01)   *B32B 7/10* (2006.01)
*B32B 7/12* (2006.01)   *B32B 21/00* (2006.01)
*B32B 21/04* (2006.01)   *B32B 21/08* (2006.01)
*B32B 27/00* (2006.01)   *B32B 27/06* (2006.01)
*B32B 27/08* (2006.01)   *B32B 27/18* (2006.01)
*B32B 27/20* (2006.01)   *B32B 27/28* (2006.01)
*B32B 27/30* (2006.01)   *B32B 27/32* (2006.01)
*B32B 27/34* (2006.01)   *B32B 27/36* (2006.01)
*B32B 3/00* (2006.01)   *B32B 3/30* (2006.01)

(54) **SCHMELZEKASCHIERTES DEKORLAMINAT**

MELT LAMINATED DECORATIVE LAMINATE

LAMINE DECORATIF CONTRECOLLE PAR FUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.08.2017   Patentblatt 2017/35**

(73) Patentinhaber: **Profol Kunststoffe GmbH**
**83128 Halfing (DE)**

(72) Erfinder:
• **Maier, Konrad**
**83512 Wasserburg (DE)**
• **Bayer, Helmut**
**83361 Kienberg (DE)**
• **Altenweger, Josef**
**83026 Rosenheim (DE)**
• **Komorek, Andrea**
**83129 Untershofen, Söchtenau (DE)**

(74) Vertreter: **Schwabe - Sandmair - Marx**
**Patentanwälte Rechtsanwalt**
**Partnerschaft mbB**
**Joseph-Wild-Straße 20**
**81829 München (DE)**

(56) Entgegenhaltungen:
WO-A1-01/78981       CN-U- 204 566 850
CN-U- 204 566 851    JP-A- 2005 125 680

**Beschreibung**

Die Erfindung betrifft ein Dekorlaminat, insbesondere ein strukturiertes Dekorlaminat, umfassend eine substratseitige Dekorschicht, die neben anderen Verwendungen besonders vorteilhaft als Bodenbelag, Wandverkleidung oder Möbelfolie Verwendung findet. Weiterhin betrifft die Erfindung solche Bodenbeläge, Wandverkleidungen, Möbelfolien sowie ein Verfahren zur Herstellung der erfindungsgemäßen Dekorlaminate.

Günstige Herstellungs- und Materialpreise, leichte Verarbeitbarkeit, chemische Beständigkeit, hohe Transparenz, gute Abriebfestigkeit und hohe Elastizität haben in der Vergangenheit Polyvinylchlorid (PVC) zum vorherrschenden künstlichen Grundstoff für Bodenbeläge, Wandverkleidungen und Möbelfolien werden lassen.

Vielfältige Anwendung haben beispielsweise PVC-Folien in der Herstellung von preiswerten Möbeloberflächen, Wandverkleidungen oder Bodenbelägen gefunden, in denen Holz- oder Steinoberflächen imitiert werden, teilweise unter Verwendung von Holz, teilweise unter Verwendung von mit Holz- oder Steindesign bedruckten Papier- oder Folienschichten.

Den Vorteilen stehen Nachteile in der mangelnden Gesundheits- und Umweltverträglichkeit des PVC sowie im Brandverhalten gegenüber, die die Suche nach alternativen Werkstoffen als Ersatz für das PVC befeuern.

Als Ersatzmaterialien sind vielfach Polymere wie Polyolefine, Polyamide, Polyurethane, Polystyrol, Polyester sowie deren Copolymere und Abkömmlinge vorgeschlagen worden, die ähnlich günstig und leicht zu verarbeiten sind, allerdings in Bezug auf ihre mechanischen Eigenschaften und Abriebfestigkeit dem PVC unterlegen waren. Oftmals sind die Sichtseiten herkömmlicher Bodenbeläge, Wandverkleidungen, Möbelfolien und ähnlicher Verbünde durch Lack- oder Harzschichten, bspw. aus Melaminharz, verstärkt. Dies erhöht die Kosten der Verbundfolien durch höhere Rohstoff- und Verarbeitungskosten und verschlechtert ihre Ökobilanz. Es sind auch bereits Verbundmaterialien beschrieben worden, die versuchen, die Vorteile von preisgünstigen Polyolefinen als Substratmaterial mit den überlegenen mechanischen Eigenschaften polarer Polymere zu verbinden. Hierbei stoßen die Bemühungen bis heute auf Schwierigkeiten, einen sicheren, beständigen Verbund der Schichten, möglichst ohne Verwendung von Klebstoff und Lösungsmittel zu gewährleisten, ein effizientes, kontinuierliches Verfahren für die Herstellung des Verbundes bereitzustellen und das Herstellungsverfahren so auszugestalten, daß das Erscheinungsbild der Mehrschichtfolie höchsten ästhetischen Anforderungen genügt und als Ersatz für natürliche Werkstoffe wie beispielsweise Holz-, Stein- oder Korkoberflächen dienen kann. WO 95/08593 A1 beschreibt abnutzungsbeständige Bodenbeläge als Alternative zu PVC-Bodenbelägen, die eine transparente Deckschicht aus Ionomer, über eine Klebstoffschicht auf eine Dekorschicht auflaminiert, aufweist. DE 41 07 150 A1 beschreibt eine mehrschichtige Fußbodenbelagfolie, wobei eine Oberfolie, die polare Gruppen enthaltenden Kunststoff enthält, über eine Haftschicht, Haftfolie, Reaktantschicht oder Haftvermittlerschicht auf eine Unterfolie angeordnet wird. DE 10 2012 103 016 A1 beschreibt einen Folien-Kaschierverbund mit mindestens zwei Kunststofffolien, enthaltend eine Trägerfolie und eine Nutzfolie, wobei die Nutzfolie auf einer Seite der Trägerfolie angeordnet ist und bedruckt sein kann, die Trägerfolie eine vorzugsweise pigmentierte Polyolefin-Folie ist und die Nutzfolie aus einem thermoplastischen Polyurethan besteht. Diese Kaschierverbünde werden ausdrücklich unter Vermeidung eines Dekorpapiers in Kleb- oder Heißkaschierung hergestellt und werden zur Verwendung in der Fußboden-, Möbel-, Interieur- und/oder Exterieur-Industrie empfohlen. Prägungen und damit verbundene Probleme werden in diesen Schriften nicht angesprochen.

Herkömmlich werden Prägungen auf der Sichtseite von gattungsgemäßen Folien, beispielsweise zur Imitation der Oberfläche der genannten natürlichen Werkstoffe in einem diskontinuierlichen Verfahren durch Heißprägung oder Prägung der erkalteten Folien nach der Aufkaschierung auf eine bedruckte Dekorschicht oder diskontinuierlich oder kontinuierlich vor der Verbindung mit der Dekorschicht ausgeführt. Hierbei wird beispielsweise eine sichtseitige Polymerschicht nach Profilextrusion auf etwa 140 °C heruntergekühlt, mit Klebstoff bestrichen und mit einer rückseitigen Dekorschicht versehen. Das Prägemuster wird dann aufgeprägt. Dieses Verfahren hat den Nachteil, daß durch Relaxation des geprägten Kunststoffs einerseits die Prägetiefe auf der Sichtseite deutlich geringer ist als vom Prägestempel vorgegeben, das Prägebild durch Lufteinschluss beeinträchtigt ist und andererseits eine Durchprägung auf die der Sichtseite abgewandte Seite, die Substratseite, erfolgt. Hierdurch wird der Klebstoffauftrag auf der Substratseite erschwert, bzw. der Klebstoffbedarf erhöht, um eine zufriedenstellende Verbindung mit dem Substrat herzustellen. Ein weiteres Problem stellt die geringe Thermobeständigkeit konventionell geprägter Profile dar.

CN 204 566 851 U beschreibt ein Dekorlaminat für den Einsatz als Bodenbelag, der eine Polyurethanschicht, eine Haftvermittlungsschicht und eine bodenseitige Polymerschicht enthält.

WO 2012/001109 A1 beschreibt ein Verfahren zur Herstellung von Bodenelementen, bei denen auf eine polymere Kompositschicht, in der Regel eine WPC-Schicht, mittels Schmelzlaminierung klebstofffrei zunächst eine dekortragende Schicht aufgetragen wird und diese nach Bedruckung gegebenenfalls sukzessive mit einer Haftvermittlerschicht und einer Ionomerschicht überzogen wird, wobei das Verfahren mit einer anschließenden Prägung abgeschlossen werden kann. Alternativ kann nach WO 2012/001109 A1 auch ein Schichtverbund aus Ionomerschicht und Polymerschicht vorgefertigt und bei Auflaminierung auf ein Substrat wie WPC kontinuierlich oder diskontinuierlich geprägt werden. Diese Verfahren werfen weiterhin die Fragen nach einem optimalen Verhältnis von Prägung und Durchprägung auf, nach einer ökonomischen kontinuierlichen Verfahrensführung, die eine zweite Aufheizung oder weitere Aufheizvorgänge vermeidet und geeignet ist, universell einsetzbare Mehrschicht-Verbundfolien bereitzustellen.

Des weiteren sind Beläge, beispielsweise Bodenbeläge erwünscht, die eine erhöhte Abriebfestigkeit aufweisen. Für Bürobodenbeläge, industrielle oder gewerbliche Anwendungen wird ein strapazierfähiger Belag gefordert, der das Problem des Aufglänzens einer ursprünglich gewollt matten Oberfläche minimiert. Solches Aufglänzen tritt häufig bei mechanischer Beanspruchung, beispielsweise mit Stuhlrollen auf. Abriebfestigkeiten, die als Bodenbelag für die gewerbliche Nutzung oder auch als Möbelfolie einzuhalten sind, werden gemäß Abriebtest nach DIN 13329:2013-12 angegeben.

Das Problem, ein Dekorlaminat mit sehr guter Haftung der Schichten untereinander bereitzustellen, die im wesentlichen frei von gesundheitsschädlichen Stoffen, insbesondere frei von Vinylchlorid-Monomeren ist und mit einem Minimum an Klebstoff und Lösemittel auskommt, idealerweise klebstoff- und lösemittelfrei ist, und darüber hinaus hervorragende Betriebsfestigkeit aufweist, wurde bislang noch nicht zufriedenstellend gelöst. Darüber hinaus stellt sich die Erfindung die Aufgabe, zusätzlich das Problem der Durchprägung in der Herstellung strukturierter Dekorlaminate zu minimieren.

Die vorliegende Erfindung löst mindestens eins, vorzugsweise mehrere bis alle der angesprochenen Probleme und verbindet erstmalig die ästhetischen Vorteile natürlicher Werkstoffe, die ökologischen, nichttoxischen Vorteile von PVC- Ersatzpolymeren und die ökonomischen, verarbeitungstechnischen und mechanischen Vorteile von PVC-Folien. Erfindungsgemäß wird die Aufgabe gelöst durch ein Dekorlaminat, insbesondere ein strukturiertes Dekorlaminat, umfassend mindestens die folgenden unmittelbar aufeinanderfolgenden, miteinander haftend verbundenen Schichten A-B-C-D:

A: sichtseitig eine Funktionsschicht umfassend ein oder mehrere Ionomere und optional einen oder mehrere in der Schicht dispergierte Füllstoffe und/oder Funktionsadditive;

B: eine Polymerzwischenschicht umfassend ein Gemisch aus 5 bis 95 Gew.-% extrudierbarem Ionomer, extrudierbarem Ionomergemisch oder extrudierbarem Ionomer-Blend und 95 bis 5 Gew.% eines Polyolefins;

C: Haftvermittlerschicht umfassend einen oder mehrere modifizierte Kunststoffe zur Haftvermittlung;

D: substratseitig eine dekortragende Schicht,

dadurch gekennzeichnet, daß der Schichtenverbund aus den Schichten A, B und C coextrudiert wird und bei einer Temperatur oberhalb der Schmelztemperatur des Schichtenverbunds mit der substratseitigen dekortragenden Schicht schmelzekaschiert wird.

Idealerweise wird hierbei während der Schmelzekaschierung gleichzeitig im selben Schritt dem Dekorlaminat auf der Sichtseite ein oder mehrere Muster plastisch aufgeprägt, wodurch ein erfindungsgemäßes strukturiertes Dekorlaminat erhalten wird. Dies kann insbesondere gewährleistet werden, wenn die Prägung des oder der plastischen (dreidimensionalen reliefartigen) Muster(s) durch dieselben Walzen erfolgt wie die Schmelzekaschierung. Durch die gleichzeitige Schmelzekaschierung und Prägung im selben Schritt wird beispielsweise die Energieeffizienz maximiert, da ein weiterer Aufheizschritt vermieden wird und gleichzeitig eine maximale Abprägung, d.h. ein maximales Abprägungsverhältnis aus erzielter Rauhtiefe $R_Z$ zu Rauhtiefe $R_Z$ der Prägewalze erreicht. Beispielsweise können erfindungsgemäß Abprägungsverhältnisse von größer als 75 %, insbesondere größer als 80 %, bevorzugt größer als 90 % oder sogar größer als 95 % bis hin zu mindestens 97 % erzielt werden.

Der Polymeranteil der Funktionsschicht A kann aus einem Ionomer bestehen oder ein Gemisch aus zwei oder mehreren Ionomeren oder ein Ionomer-Blend aufweisen. In einer Ausführungsform besteht die Funktionsschicht A im wesentlichen aus einem Ionomer. In einer bevorzugten Ausführungsform liegt der Polymeranteil der Funktionsschicht im Bereich von 75 bis 99 Gew.-%, insbesondere 80 bis 98 Gew.-%, stärker bevorzugt 90 bis 97 Gew.-% und ganz besonders 94 bis 96 Gew.-%. Der Anteil an Füllstoffen und Funktionsadditiven in der Funktionsschicht liegt somit im allgemeinen zwischen 0 und 25 Gew.-%, bevorzugt im Bereich von 1 bis 25 Gew.-%, insbesondere 2 bis 20 Gew.-%, stärker bevorzugt 3 bis 10 Gew.-% und ganz besonders 4 bis 6 Gew.-%.

Die Ionomere für die Funktionsschicht A können vorteilhaft unabhängig voneinander aus denselben Polymeren ausgewählt werden wie für die Polymerzwischenschicht B. Zur Verwendung in der Funktionsschicht A und in der Zwischenschicht B besonders vorteilhafte Ionomere sind Ionomer-Blends, beispielsweise Blends von Ionomer(en) mit Polyamid(en) oder Ionomere, die eine Dichte (DIN EN ISO 1183-1:2013-04) im Bereich von 0,8 bis 1,2 g/cm$^3$, insbesondere 0,9 bis 1,0 g/cm$^3$, ganz besonders etwa 0,94 bis 0,96 g/cm$^3$ aufweisen. Bevorzugt werden Ionomere, die einen Schmelzindex (Melt flow index MFI, bei 190 °C und 2,16 kg nach (DIN EN ISO 1183-1:2013-04) im Bereich von 0,4 bis 7,0 g/10 min, insbesondere 0,5 bis 5,7 g/10 min, ganz besonders vorteilhaft 0,6 bis 0,9 g/10 min oder auch 5,3 bis 5,6 g/10 min. Der Schmelzpunkt (DIN EN ISO 3146:2002-06) des eingesetzten Ionomers liegt vorteilhaft im Bereich von 85 bis 98 °C, insbesondere 88 bis 97 °C, ganz besonders vorteilhaft 89 bis 92 °C, oder auch 94 bis 96 °C. Der Erweichungspunkt (vicat softening point, DIN EN ISO 306:2012-01) des eingesetzten Ionomers liegt vorteilhaft im Bereich von 60 bis 70 °C, insbesondere 62 bis 68 °C, ganz besonders vorteilhaft bei etwa 65 °C. Beispielsweise wird erfindungsgemäß ein Surlyn-Ionomer oder ein Gemisch aus Surlyn-Ionomeren eingesetzt. Von Vorteil ist, wenn das Polymer oder das Polymergemisch transparent oder halbtransparent ist. Bevorzugt im Sinne der Erfindung ist das Dekor der dekortragenden Schicht D durch die Schichten A, B und C hindurch sichtbar.

Die verwendeten Ionomere, Ionomergemische sowie Ionomer-Blends können in den Schichten A und B voneinander teilweise oder vollständig sein oder sich nur in den jeweiligen Anteilen unterscheiden. Besonders bevorzugt ist jedoch eine Ausführungsform, in der für die Funktionsschicht A dasselbe Ionomer, Ionomergemisch oder Ionomer-Blend verwendet wird wie in der Zwischenschicht B. In diesem Fall ist die Adhäsion der Schichten A und B am höchsten, was sich vorteilhaft auf die Peelingbeständigkeit auswirkt. Besonders vorteilhaft sind die jeweiligen eingesetzten Ionomere identisch.

Die erwähnten Füllstoffe der Funktionsschicht A können erfindungsgemäß vorteilhaft ausgewählt sein aus der Gruppe bestehend aus Korund, Titandioxid, Sand, Talkum, Kreide, Kieselsäure, Glasperlen sowie deren Gemische. Funktionsadditive, die erfindungsgemäß Bestandteil der Funktionsschicht A sein können, umfassen UV-Stabilisatoren, UV-Absorber, Farbpigmente, Wachse, Gleitmittel, Anti-Slip-Additive, Antistatika, antimikrobielle sowie dehäsiv wirkende Additive und Flammschutzmittel sowie deren Gemische.

Die Korngröße der dispergierten Füllstoffpartikel ist typischerweise zu mindestens 90 %, bevorzugt zu mindestens 95% im Bereich von 0,5 bis 100, bevorzugt 2 bis 10 $\mu$m. Die Form der dispergierten Körner ist unkritisch. Idealerweise werden die Körner in Kugelform vorliegen. Die Korngröße der dispergierten Füllstoffpartikel kann dabei bevorzugt einen Median $D_{50}$ von bis zu 10 $\mu$m, bevorzugt 2 bis 6 $\mu$m, besonders bevorzugt 3 bis 5 $\mu$m aufweisen.

Die Polymerzwischenschicht B umfasst ein Gemisch aus 5 bis 95 Gew.-%, insbesondere 50 bis 94 Gew.-%, ganz besonders 70 bis 92 Gew.-%, besonders bevorzugt 80 bis 90 Gew.-%, beispielsweise 85 Gew.-% extrudierbarem Ionomer, extrudierbarem Ionomergemisch oder extrudierbarem Ionomer-Blend. Die Polymerzwischenschicht B umfasst daneben 95 bis 5 Gew.-%, insbesondere 50 bis 6 Gew.-%, ganz besonders 30 bis 18 Gew.-%, besonders bevorzugt 20 bis 10 Gew.-%, beispielsweise 15 Gew.-% eines Polyolefins. Die Polymerzwischenschicht B kann gegebenenfalls bis zu 10 Gew.-% eines oder mehrerer weiterer polymerer Materialien, Füll-, Effekt- und/oder Funktionsadditive enthalten, vorausgesetzt die Summe übersteigt nicht 100 Gew.-%.

Als Polyolefine werden insbesondere Metallocen-Polyolefine wie Polypropylen und am meisten Metallocen-Polyethylen bevorzugt.

Durch die eingesetzten Kunststoffe, den erfindungsgemäßen Schichtaufbau sowie das erfindungsgemäße Verfahren kann ganz oder weitgehend auf die Anwesenheit von Weichmachern in den Kunststoffen verzichtet werden. Ebenso entfällt die Gegenwart etwaiger krebserzeugender Restmonomere, wie sie beispielsweise im PVC auftreten. Dennoch werden die eingangs genannten hohen Abriebfestigkeiten, Flexibilität, Einfachheit und Ökonomie in der Herstellung, Optik und Haptik des Produkts erzielt, so daß die vorliegende Erfindung einen mindestens gleichwertigen Ersatz für PVC-Folien darstellt - ohne die damit verbundenen Nachteile aufzuweisen.

Die Haftvermittlerschicht C umfaßt einen oder mehrere modifizierte Kunststoffe zur Haftvermittlung. Erfindungsgemäß vorteilhaft kann der oder die modifizierte(n) Kunststoff(e) zur Haftvermittlung bevorzugt ein oder mehrere mit Maleinsäureanhydrid, alkyliertem Maleinsäureanhydrid und/oder Carbonsäure modifizierte(s) Polymer(e), umfasst/umfassen. Der oder die modifizierte Kunststoff(e) zur Haftvermittlung kann/können vorteilhaft ein oder mehrere Copolymer(e) oder gepfropfte (Co-)Polymere von Carbonsäurefunktionalität tragenden Monomeren, insbesondere Maleinsäureanhydrid und/oder alkyliertem Maleinsäureanhydrid mit Polypropylen, Polyethylen (bspw. LDPE oder LLDPE), Ethyl-Vinylacetat (EVA), Ethylen-Butyl-Acrylat (EBA), Ethylen-Ethl-Acrylat (EEA), Ethylen-Acrylsäure (EAA), Ethylen-Methacrylsäure (EMAA), Maleinsäureacetat (MAA) und/oder Polyacrylat-Kautschuk (ACM) umfassen.

Die Haftvermittlerschicht C kann hierbei eine homogene Schicht darstellen. Sie kann alternativ mehrere, beispielsweise zwei, drei oder mehr Schichten umfassen, die jeweils gleiche oder verschiedene der obengenannten modifizierten Kunststoffe zur Haftvermittlung enthalten. In manchen Ausführungsformen wird durch eine Abfolge unterschiedlicher haftvermittelnder modifizierter Kunststoffe eine bessere Haftung der Schichten B und D erzielt.

Der Schichtenverbund aus den Schichten A, B und C und gegebenenfalls weiteren an Schicht A anschließenden Schichten wird bei Temperaturen coextrudiert, bei denen die Polymere aufgeschmolzen sind. Vorzugsweise erfolgt die Coextrusion bei Temperaturen im Bereich 100 bis 400 °C, besonders bevorzugt im Bereich von 200 bis 300 °C. Der folgende Schritt der Prägung und Schmelzekaschierung erfolgt, solange sich der coextrudierte Schichtverbund oberhalb der Schmelztemperatur befindet. Typischerweise können Prägung und Schmelzekaschierung bei Temperaturen oberhalb 200 °C, insbesondere oberhalb 230 °C, beispielsweise bei mindestens 250 °C, aber vorteilhaft unterhalb von 280 °C oder 260 °C erfolgen. Vorteilhaft erfolgt die Schmelzekaschierung in derselben Maschine zeitlich und räumlich unmittelbar im Anschluss an die Coextrusion.

Durch die Coextrusion wird ein oder mehrere zusätzliche Laminierungsschritte sowie damit verbundener apparativer Mehraufwand und Einsatz von Klebstoffen und Lösemitteln vermieden. Neben der verbesserten Verfahrensökonomie und reduzierten Emissionen durch Lösemittelbelastung ermöglicht die Coextrusion zudem eine besonders feste Haftung der Schichten untereinander. Es wird angenommen, daß dies auch durch eine verstärkte Interpenetration der Nachbarschichten im Extrusionsverfahren bewirkt wird.

Ein Vorteil der Erfindung ist, daß der Schichtenverbund ABCD weitgehend lösemittel- und/oder klebstofffrei ausgeführt werden kann. Idealerweise enthält der Verbund keine organischen Lösemittel und/oder Klebstoffe.

Die Gleichzeitigkeit des Prägens und Schmelzekaschierens bewirkt, daß eine realistische Prägetiefe auf der Sichtseite der Mehrschichtverbundfolie erzielt werden kann, während das Problem des "Durchprägens" auf die Substratseite vollständig oder weitestgehend vermieden werden kann. Dadurch, daß der coextrudierte Schichtenverbund A-B-C noch nicht erkaltet ist und die Prägung praktisch in der Schmelze erfolgt, erfolgt keine wahrnehmbare oder lediglich minimale Relaxation nach der Prägung. Erfindungsgemäß ist überraschend möglich, die "Durchprägung" weitestgehend zu vermeiden und gleichzeitig ein hohes Maß an Abriebfestigkeit und geringes Staining zu erzielen.

Ein weiterer Vorteil besteht darin, daß die Prägung temperaturbeständiger wird und gleichzeitig die geprägte Mehrschichtfolie thermoformbar wird, ohne die Prägung zu zerstören. Dies ist insbesondere von großer Bedeutung für die Anwendung als 3D-Folie, beispielsweise als Möbelfolie oder als Dekorfolie für Türen. Ohne durch Theorie gebunden zu sein, führen die Erfinder dies darauf zurück, daß die Prägung plastisch und mit minimalen elastischen Anteilen oder ohne elastische Anteile erfolgt.

Zudem ist das Verfahren in hohem Maße wirtschaftlich, da ein weiterer Aufheizvorgang für die Kaschierung nicht benötigt wird. Des weiteren ermöglicht das erfindungsgemäße Verfahren eine zuverlässige Verbindung zwischen Substrat, dekortragender Schicht, Polymerzwischenschicht und sichtseitiger Polymerschicht enthaltend thermoplastisches Ionomer. Eine herkömmliche Laminierung des weichen Materials der sichtseitigen Polymerschichten mit der dekortragenden Schicht ist dagegen mit Nachteilen verbunden, wie zum Beispiel notwendiger Klebstoffauftrag, Verwendung von Lösungsmitteln, schlechtere Haftung, zusätzliche Verfahrensschritte.

Ein Maß für die "Durchprägung", die mit einer ausgewählten Prägewalze (Muster, Rauhtiefe $R_Z$ der Stempelgravur) erzielt wird, stellt der dimensionslose Prägetiefeindex $I_P$ dar. Er berechnet sich aus dem Verhältnis der Prägetiefe auf der Sichtseite zur Durchprägung auf der Substratseite, jeweils gemessen als gemittelte Rauhtiefe $R_Z$ (DIN EN ISO 4287:2010-07) geteilt durch die Dicke des strukturierten Dekorlaminats, multipliziert mit 1000, alle Werte in μm:

$$I_P = R_Z \text{ (Sichtseite) x } 1000/(R_Z(\text{Substratseite}) \text{ x Dicke (Dekorlaminat))}$$

Das heißt, wenn das Dekorlaminat dem Schichtverbund A-B-C-D entspricht:

$$I_P = R_Z \text{ (Sichtseite) x } 1000/(R_Z(\text{Substratseite}) \text{ x Dicke (A-B-C-D))}$$

Nach dem Erkalten wird erfindungsgemäß vorzugsweise ein Prägetiefeindex von mindestens 7,0 erzielt. Für manche Anwendungen ist ein Prägetiefeindex von mindestens 8,0 oder mindestens 9,5 oder von 10 bis 20, bevorzugt mindestens 13 oder noch vorteilhafter mindestens 14 oder mindestens 16 erzielbar. Erfindungsgemäß können Prägetiefeindizes bis zu 30 oder höher erzielt werden, beispielsweise 7,0 bis 30; 8,0 bis 30; 6,0 bis 20; 9,5 bis 30; 9,5 bis 20; 10 bis 30; oder besonders bevorzugt 13 oder 16 bis 30.

Noch deutlicher wird der Unterschied zwischen erfindungsgemäß geprägten Dekorfolien und konventionell geprägten Dekorfolien, wenn man den genannten Prägetiefeindex Ip mit dem jeweiligen Abprägeverhältnis multipliziert und somit zusätzlich die Vorbildtreue des plastischen geprägten Bildes berücksichtigt. Der entsprechender Wert $I_P * R_Z$ (Folie)/$R_Z$(Walze) wird im folgenden als "modifizierter Prägetiefeindex" bezeichnet.

Ein Vorteil eines großen Prägetiefeindexes bzw. modifizierten Prägetiefeindexes besteht darin, daß auf der Sichtseite eine warme, weiche, trittschalldämmende plastische Ausgestaltung erfolgen kann, die beispielsweise den haptischen und optisch-ästhetischen Eindruck groben Holzes, groben Natursteins oder Leders realistisch nachahmt, während die Schichtoberfläche auf der Substratseite so glatt und eben wie möglich gehalten werden kann. Dadurch wird die Verbindung zu einem Substrat E erleichtert. Beispielsweise wird die benötigte Menge an Klebstoff für eine Verbindung zu einem Substrat E minimiert. Zusätzlich stellt die vorliegende Erfindung erstmalig Strukturfolien ohne zusätzlichen sichtseitigen Schutz durch Lack- oder Harzschicht(en) zur Verfügung, die dennoch geeignet sind, die Anforderungen an Abriebbeständigkeit, chemische Beständigkeit, Kratzfestigkeit, geringes Staining, hohe Zähigkeit, gutes Rückstellvermögen zu erfüllen. Vorteilhaft ist die erfindungsgemäße MehrschichtVerbundfolie frei von PVC und/oder Melaminharz.

Erfindungsgemäß kann die dekortragende Schicht in einer Ausführungsform bedrucktes Papier und/oder bedruckte Kunststofffolie umfassen. Hierbei kann die Kunststofffolie monoaxial oder biaxial verstreckt sein. In einer bevorzugten Ausführungsform umfaßt die dekortragende Schicht mit Kunststoff imprägniertes oder in Kunststoff eingebettetes Papier. In einer anderen bevorzugten Ausführungsform ist die dekortragende Schicht frei von Papier. Wegen der erhöhten Brillianz kann ein Foliendruck erfindungsgemäß besonders bevorzugt sein. Besonders bevorzugt werden erfindungsgemäß Druckfarben auf Basis von Kasein (Kaseinfarben) und/oder auf Polyurethan basierende Farben. Das Dekor kann farblos, weiß, unifarben oder auch anders gefärbt sein. Bevorzugt ist die Farbe des Dekors an die natürliche Farbe der nachgeahmten Oberfläche angelehnt, beispielsweise Holz, Naturstein oder Leder.

In einer Ausführungsform weist die dekortragende Schicht D einen Primer auf.

In manchen Fällen kann es sinnvoll sein, auf die dekortragende Schicht beispielsweise über einen Kalander einen Primer aufzutragen. Hierdurch kann der Verbund mit dem Schichtenverbund A-B-C verbessert werden, beispielsweise bevorzugt im Falle der Verwendung von Kasein-Druckfarben. Die Erfindung betrifft in gleicher Weise erfindungsgemäße Schichtverbünde, in denen die substratseitige dekortragende Schicht keinen Primer aufweist.

Die erfindungsgemäß aufgeprägten Muster sind in der Prägetiefe und im Motiv prinzipiell nicht beschränkt, die maximale Prägetiefe wird jedoch durch die Schichtdicke vorgegeben. Die Motive können dabei Imitationen von natürlichen Werkstoffen wie Holz, Stein, Leder, Textil, Putzstruktur sein oder jegliches Muster sein, das sich auf einer endlosen Walze darstellen lässt. Das erfindungsgemäße Verfahren ermöglicht hierbei durch die hohe Abprägung eine möglichst große Übereinstimmung und Abbildgenauigkeit der geprägten Oberfläche mit dem natürlichen Vorbild. In besonders vorteilhafter Weise lässt sich erfindungsgemäß das aufgeprägte Muster mit dem gedruckten Muster synchronisieren, so daß beispielsweise bei einer Holzimitation die Maserung im haptischen Eindruck mit dem optischen Eindruck übereinstimmt. Eine Ausführung des jeweiligen Musters als endlose und unterbrechungslose Wiederkehr verstärkt den naturidentischen Eindruck noch. Daher ist in einer bevorzugten Ausführungsform der Erfindung das aufgeprägte Profil oder Muster mit dem Dekor synchronisiert.

In einer Ausführungsform der Erfindung enthält die dekortragende Schicht D ein extrudierbares thermoplastisches Polymer, ausgewählt aus der Gruppe bestehend aus Polyethylenen, Polypropylenen und Polybutylenen, Polystyrol, Polyamid, Polyester wie Polyethylenterephthalat (PET) sowie deren Gemischen. Ein Vorteil solcher kunststofffolienhaltiger dekortragender Schichten sind ihre gute Bedruckbarkeit, gute Prozessfähigkeit, ihre Wasserfestigkeit sowie ihre chemische Beständigkeit.

Nicht notwendig, aber typischerweise weist die Funktionsschicht A eine Dicke im Bereich von 1 bis 200 $\mu$m, vorzugsweise 5 bis 100 $\mu$m, insbesondere 20 bis 80 $\mu$m, besonders bevorzugt 40 bis 60 $\mu$m auf. Die Polymerzwischenschicht B weist nicht notwendig, aber typischerweise eine Dicke im Bereich von 10 bis 500 $\mu$m, vorzugsweise 40 bis 300 $\mu$m, insbesondere 100 bis 280 $\mu$m, besonders bevorzugt 200 bis 250 $\mu$m auf. Nicht notwendig, aber typischerweise weist die Haftvermittlerschicht C eine Dicke im Bereich von 1 bis 100 $\mu$m, vorzugsweise 5 bis 30 $\mu$m, insbesondere 10 bis 25 $\mu$m, besonders bevorzugt etwa 20 $\mu$m auf. Nicht notwendig, aber typischerweise weist die substratseitige dekortragende Schicht D eine Dicke von 10 bis 500 $\mu$m, vorzugsweise 50 bis 150 $\mu$m, insbesondere 100 bis 140 $\mu$m, beispielsweise etwa 120 $\mu$m auf. Alle Angaben zu Schichtdicken beziehen sich in geprägten Bereichen auf arithmetische Mittel bzw. auf Schichtdicken ohne Prägung.

Es ist bevorzugt, daß die Zwischenschicht B dicker, insbesondere um mindestens 50, besonders bevorzugt mindestens 100 oder ganz besonders bevorzugt mindestens 150 oder mindestens 200 $\mu$m dicker ist als die Funktionsschicht A.

Das Dekorlaminat der vorliegenden Erfindung kann weiterhin vorteilhaft so ausgestaltet sein, daß sie mindestens die aufeinanderfolgenden, miteinander haftend verbundenen Schichten F-A-B-C-D umfasst, wobei Schicht F eine oder mehrere miteinander haftend verbundene Schichten bezeichnet. Schicht F kann mit Schicht A unmittelbar, über eine Haft- oder Klebeschicht, durch Kaschierung oder durch mechanische Verbindungselemente verbunden sein. Vorteilhaft wird Schicht F oder zwei oder mehrere Schichten, die hier unter "F" zusammengefasst werden, durch Coextrusion mit den Schichten A, B und C im selben Arbeitsgang verbunden. Hierbei kann die Schicht F bzw. die Schichten F beispielsweise im ganzen eine Dicke von 1 bis 200 $\mu$m, vorteilhaft 10 bis 100 $\mu$m haben. Jede einzelne der Schichten F kann vorteilhaft eine Dicke von 1 bis 40, ganz besonders 10 bis 20 $\mu$m aufweisen. Der dimensionslose Prägetiefeindex Ip ist in diesem Fall einer zusätzlichen Schicht F wie folgt definiert (alle Werte in $\mu$m):

$$I_P = R_Z \text{ (Sichtseite) x } 1000/(R_Z(\text{Substratseite}) \text{ x Dicke (F-A-B-C-D))}$$

und beträgt mindestens 7,0. Für manche Anwendungen ist ein Prägetiefeindex von mindestens 8,0 oder mindestens 9,5 oder von 10 bis 20, bevorzugt mindestens 13 oder noch vorteilhafter mindestens 14 oder mindestens 16 erzielbar. Erfindungsgemäß können Prägetiefeindizes bis zu 30 oder höher erzielt werden, beispielsweise 6,0 bis 30; 8,0 bis 30; 6,0 bis 20; 9,5 bis 30; 9,5 bis 20; 10 bis 30; oder besonders bevorzugt 13 oder 16 bis 30.

Schicht F kann dabei vorteilhaft eine oder mehrere der folgenden Schichten umfassen: weitere Ionomer-Schicht(en), Abdeckschicht, UV-Schutzschicht, Lackschicht, Antistainingschicht, Feuchtigkeitsschutzschicht, mechanische Schutzschicht, Antistatikschicht, Rutschverhindererschicht, oder (Heiß-)Klebeschicht, wobei jede der Schichten F eine oder mehrere der genannten Funktionen und dementsprechende funktionelle Additive aufweisen kann. Die Schicht F, bzw. die Schichten F kann/können transparent sein kann und/oder ein Oberflächenprofil aufweisen.

Das Dekorlaminat gemäß der vorliegenden Erfindung kann beispielsweise und ideal als Bodenbelag oder in der Herstellung eines Fußbodenbelags, Bodenbelags, als Wand- oder Dachpaneele oder in der Herstellung von Wand- oder Dachpaneelen, als Möbelfolie, Türfolie, 3D-Folie insbesondere in der Herstellung von Sperrholz- oder Spanplatten und/oder als graphische Folie, insbesondere Druckfolie verwendet werden.

Die Erfindung betrifft daher auch einen Bodenbelag, Fußbodenbelag, Wand- und Dachpaneele, eine Möbelfolie, Türfolie, 3D-Folie, Sperrholz und Spanplatten und graphische Folie, insbesondere Druckfolie umfassend ein erfindungsgemäßes Dekorlaminat. Schichtkörper gemäß der vorliegenden Erfindung, umfassend ein erfindungsgemäßes Dekorlaminat, insbesondere strukturiertes Dekorlaminat, sind insbesondere ein Fußbodenbelag, Möbelfolie oder 3D-Folie.

Ein erfindungsgemäßer Fußbodenbelag weist dabei vorteilhaft eine weitere, an Schicht D anschließende Substratschicht E auf, die mit Schicht D unmittelbar, über eine Haft- oder Klebeschicht, durch Kaschierung oder durch mechanische Verbindungselemente verbunden ist. Die Substratschicht E wird im Rahmen der vorliegenden Offenbarung nicht als Bestandteil des Dekorlaminats angesehen.

Die Substratschicht E umfasst dabei bevorzugt eine der folgenden Schichten: Rutschverhindererschicht, Wärmedämmschicht, Schall-, insbesondere Trittschalldämpfschicht, Wärmeleitschicht, Klebeschicht, Sperrholz- oder Spanplattenschicht, Wood-Plastic-Composite (WPC)-Schicht, Faserbetonschicht.

Die Schichten A, B, C, D, E und F können erfindungsgemäß frei von funktionellen Additiven, Effektstoffen und/oder Pigmenten sein, die Schichten B, C, D, E und F alternativ oder zusätzlich auch frei von Füllstoffen. Andererseits weisen in einer weiteren Ausführungsform der Erfindung eine oder mehrere dieser Schichten, beispielsweise die Schichten D und/oder E, oder die Schichten D und/oder insbesondere B funktionelle Additive, Füll-, Effektstoffe bzw. Pigmente in einer Menge von unabhängig von einander je 1 bis 25 Gew.-%, bevorzugt 2 bis 20 Gew.% oder 3 bis 10 Gew.-% auf, wobei selbstverständlich der Gesamtanteil an funktionelle Additive, Füll-, Effektstoffe bzw. Pigmente zum polymeren Material 25 Gew.-%, bevorzugt 20 Gew.-%, insbesondere 10 Gew.-% der jeweiligen Schicht nicht übersteigt. In einer Ausführungsform ist der Schichtverbund A-B-C-D oder insbesondere Schicht D frei von anorganischen Füllstoffen, Effektstoffen und/oder organischen oder anorganischen Pigmenten. In einer anderen Ausführungsform kann gerade die Anwesenheit solcher Pigmente oder Füllstoffe in einer oder mehreren der Schichten A-B-C-D, insbesondere in Schicht A, für besondere Effekte sorgen.

Wie oben beschrieben betrifft die Erfindung in gleicher Weise ein Verfahren zur Herstellung eines erfindungsgemäßen Dekorlaminats, dadurch gekennzeichnet, daß in einem ersten Schritt der Schichtenverbund aus den Schichten A-B-C, gegebenenfalls F-A-B-C coextrudiert wird und dieser Schichtenverbund im zweiten Schritt bei einer Temperatur oberhalb der Schmelztemperatur des Schichtenverbunds mit der dekortragenden Substratschicht schmelzekaschiert wird. Vorteilhaft wird gleichzeitig im selben Schritt während der Schmelzekaschierung des Dekorlaminats auf der Sichtseite ein oder mehrere Muster plastisch aufgeprägt, wobei die Temperatur des Schichtenverbunds zwischen dem ersten und dem zweiten Verfahrensschritt nicht unter die Schmelztemperatur des Schichtenverbunds A-B-C, bzw. F-A-B-C sinkt. Auf diese Weise wird ein erfindungsgemäßes strukturiertes Dekorlaminat erhalten.

Vorteilhafterweise wird hierbei der zweite Verfahrensschritt bei einer Temperatur von 150-300 °C ausgeführt. Wie bereits ausgeführt wird das erfindungsgemäße Verfahren bevorzugt kontinuierlich durchgeführt. Bevorzugt wird die Prägung auf der Sichtseite mit dem bedruckten Dekor der dekortragenden Schicht synchronisiert.

Die Coextrusion erfolgt dabei auf konventionelle Weise unter dem Fachmann geläufigen Bedingungen. Besonders vorteilhafte Eigenschaften der erfindungsgemäßen Mehrschichtverbundfolien können dadurch erzielt werden, daß die für sich bekannten Verfahrensschritte des Schmelzekaschierens und Prägens in einer bevorzugten Ausführungsform der Erfindung gleichzeitig und ohne erneuten Aufheizvorgang im kontinuierlichen Betrieb durchgeführt werden.

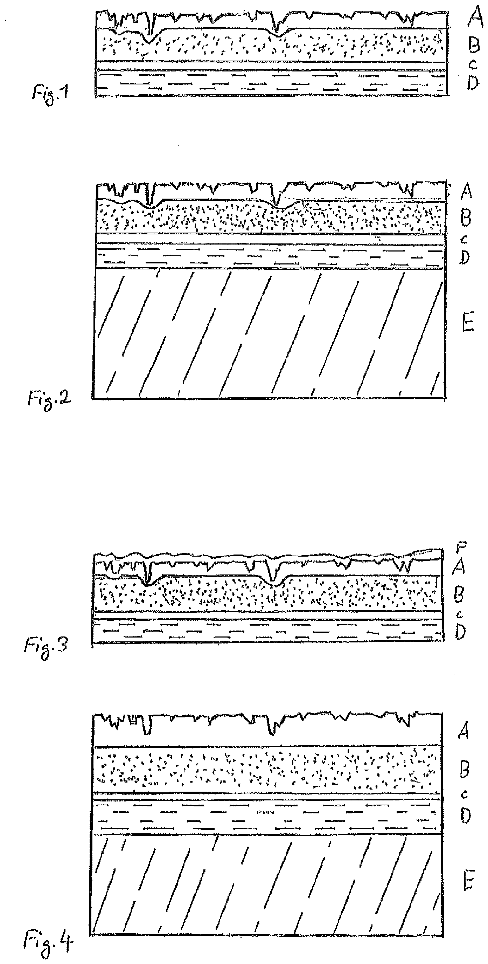

Fig. 1 zeigt einen Querschnitt einer Ausführungsform des Dekorlaminats der Erfindung mit dem Schichtaufbau A-B-C-D. Die Schichten sind in diesem Beispiel ausgeführt aus:

Schicht A (50 $\mu$m) 93 Gew.-% Surlyn-Ionomer und 7 Gew.-% Kieselsäure als Füllstoff Schicht B (230 $\mu$m) 80 Gew.-% Surlyn-Ionomer und 20 Gew.-% Metallocen-Polyethylen (Metallocene PE)
Schicht C (20 $\mu$m) Maleinsäureanhydrid-modifiziertes Polyethylen als modifizierter Kunststoff zur Haftvermittlung;
Schicht D (300 $\mu$m) mit Kaseinfarbe bedrucktes und mit Primer (10 $\mu$m) beschichtetes Papier oder Kunststofffolie.

Fig. 2 zeigt einen Querschnitt einer weiteren Ausführungsform des Dekorlaminats, beispielsweise als Fußbodenbelag mit dem Schichtaufbau A-B-C-D-E. Die Schichten sind in diesem Beispiel ausgeführt aus:

Schicht A (50 $\mu$m) 94 Gew.-% Surlyn-Ionomer und 6 Gew.-% Kieselsäure als Füllstoff
Schicht B (230 $\mu$m) 87 Gew.-% Surlyn-Ionomer und 13 Gew.-% Metallocen-Polyethylen
Schicht C (20 $\mu$m) Maleinsäureanhydrid-modifiziertes Polyethylen als modifizierter Kunststoff zur Haftvermittlung;
Schicht D (300 $\mu$m) mit Kaseinfarbe bedrucktes und mit Primer (10 $\mu$m) beschichtetes Papier oder Kunststofffolie.
Schicht E (2000 $\mu$m) WPC.

Fig. 3 zeigt einen Querschnitt einer weiteren Ausführungsform des erfindungsgemäßen Dekorlaminats, beispielsweise als Möbelfolie mit dem Schichtaufbau F-A-B-C-D. Die Schichten sind in diesem Beispiel ausgeführt aus:

Schicht F (50 $\mu$m) Lack
Schicht A (80 $\mu$m) 100 Gew.-% extrudierbares Ionomer
Schicht B (150 $\mu$m) 91 Gew.-% desselben Ionomers wie in Schicht A und 9 Gew.-% Metallocen-Polyethylen
Schicht C (5 $\mu$m) Maleinsäureanhydrid-modifiziertes Polyethylen als modifizierter Kunststoff zur Haftvermittlung;
Schicht D (100 $\mu$m) mit Kaseinfarbe bedrucktes und mit Primer (10 $\mu$m) beschichtetes PET.

In einer Abwandlung wurde in Schicht D statt PET BOPP (biaxial ortientiertes Polypropylen) eingesetzt.

Fig. 4 zeigt einen Querschnitt einer weiteren Ausführungsform des erfindungsgemäßen Dekorlaminats, beispielsweise als Möbelfolie mit dem Schichtaufbau A-B-C-D-E. Die Schichten sind in diesem Beispiel ausgeführt aus:

Schicht A (80 $\mu$m) 100 Gew.-% Surlyn-Ionomer
Schicht B (120 $\mu$m) 95 Gew.-% desselben Surlyn-Ionomers wie in Schicht A und 5 Gew.-% Metallocen-Polyethylen;
Schicht C (10 $\mu$m) Maleinsäureanhydrid-modifiziertes Polyethylen als modifizierter Kunststoff zur Haftvermittlung;
Schicht D (90 $\mu$m) mit Kaseinfarbe bedrucktes und mit Primer (10 $\mu$m) beschichtetes Papier; Schicht E (1500 $\mu$m)
Sperrholzschicht, Holz.

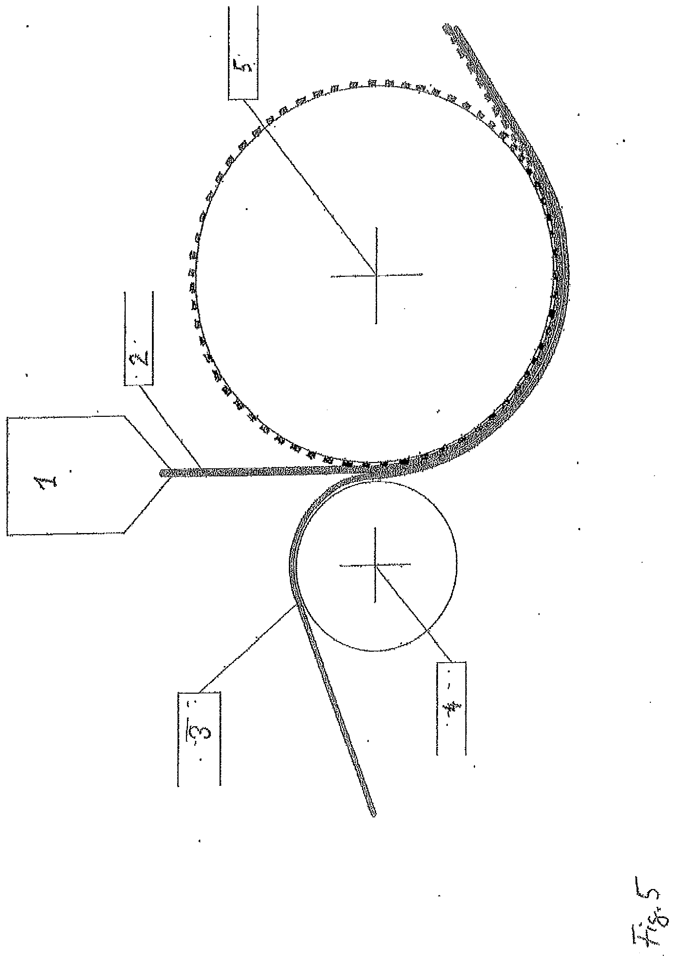

Fig. 5 zeigt einen schematischen und typischen Aufbau des erfindungsgemäßen Verfahrens. Hierbei wird in der Düse (1) ein Verbund aus einer beispielsweise aus Füllstoffe enthaltendem Ionomer bestehenden Schicht A, einer ionomerhaltigen und polyethylenhaltigen Polymerzwischenschicht B und einer (substratseitigen) Haftvermittlerschicht C als Schmelze (2) bei einer Temperatur von 200 bis 280 °C coextrudiert und unmittelbar darauf bei derselben Temperatur auf der Substratseite mit einer bedruckten Papierschicht D (3), die über eine Walze (4), beispielsweise eine Gummiwalze zugeführt wird, in Verbindung gebracht. Schicht D und der Schichtverbund A-B-C werden gleichzeitig oder unmittelbar nach dem Zusammenbringen bei Temperaturen beispielsweise im Bereich von 150 bis 300 °C zwischen Prägewalze (5) und Walze (4) schmelzekaschiert und in dieser Ausführungsform gleichzeitig sichtseitig geprägt.

Beispiele:

Beispiel 1

Ein strukturiertes Dekorlaminat mit der folgenden Schichtenfolge wurde nach dem erfindungsgemäßen Verfahren hergestellt. Die Coextrusion der Schichten A, B und C erfolgte dabei bei 250 °C, die Schmelzekaschierung mit der Polypropylenschicht D (mit Kaseinfarbe mit Holzfaserungsmuster bedruckt und mit Primer versehen) erfolgte unmittelbar anschließend, noch bei 230 °C und einer Linienlast von 14,5 kN/m (145 N/cm). Hierbei wurde sichtseitig ein plastisches Holzmaserungs-Muster (Rauhtiefe $R_Z$ der Stempelgravur der Prägewalze war 120 $\mu$m) aufgeprägt und so ein erfindungsgemäßes strukturiertes Dekorlaminat erhalten.

Schicht A (50 $\mu$m) 95 Gew.-% Ionomer (Surlyn® 1706 von Dupont), 5 Gew.-% Kieselsäure mit 2-50 $\mu$m Korngröße (95%);
Schicht B (230 $\mu$m) 85 Gew.-% Ionomer (Surlyn® 1706 von Dupont) und 15 Gew.-% Metallocen-Polyethylen
Schicht C (20 $\mu$m) Maleinsäureanhydrid-modifiziertes Polyethylen als modifizierter Kunststoff zur Haftvermittlung;
Schicht D (120 $\mu$m einschließlich max. 10 $\mu$m Primer) mit Kaseinfarbe bedruckte und mit Primer beschichtete Polypropylen-Folie.

Tabelle 1 listet einige Parameter zur Charakterisierung der Mehrschichtverbundfolie des Beispiels 1 und Vergleichsbeispiels 2 auf.

Die Dicke der Schichten bzw. des Dekorlaminats oder Schichtenverbunds wurde in den Beispielen als arithmetischer Mittelwert fachüblich über den Durchsatz der Extruder eingestellt und überwacht.

Vergleichsbeispiel 2

Ein strukturiertes Dekorlaminat mit der folgenden Schichtenfolge wurde analog Beispiel 1 hergestellt. Im Unterschied zu Beispiel 1 enthielt die Zwischenschicht B kein Polyolefin,

Schicht A (50 $\mu$m) 95 Gew.-% Ionomer (Surlyn® 1706 von Dupont), 5 Gew.-% Kieselsäure mit 2-50 $\mu$m Korngröße (95%)
Schicht B (230 $\mu$m) 100 Gew.-% Ionomer (Surlyn® 1706 von Dupont)

Schicht C (20 µm) Maleinsäureanhydrid-modifiziertes Polyethylen als modifizierter Kunststoff zur Haftvermittlung; Schicht D (120 µm einschließlich max. 10 µm Primer) mit Kaseinfarbe bedruckte und mit Primer beschichtete Polypropylen-Folie.

Die Schichtverbundfolien des Beispiels 1 und des Vergleichsbeispiels 2 wurden mit Spanplatte/Hotmeltverklebung kaschiert und auf Kratzfestigkeit (DIN 438-2), Scheuerbeständigkeit, Abriebfestigkeit (DIN EN 13329) sowie Fleckenunempfindlichkeit (DIN 438-2) getestet.

Der Abriebwert gemäß DIN 13329:2013/12 wurde mit SH4 / Wechsel nach je 200 Umdrehungen gemessen.

Tabelle 1 Vergleich zwischen Beispiel 1 und Vergleichsbeispiel 2

Tabelle 1:

| | **Beispiel 1** | **Vergleichsbeispiel 2** |
|---|---|---|
| Gesamtdicke A-B-C-D | 420 µm | 420 µm |
| Prägetiefeindex $I_P$ | 16,62 | |
| Dichte | 0,985 g/cm$^3$ | |
| Flächengewicht | 3,913 g/100cm$^2$ | |
| E-Modul längs | 360 MPa | 472 MPa |
| Max. Dehnung längs | 251 % | 244 % |
| Reißdehnung längs | 251 % | 244 % |
| Abrieb bei Dicke 420 µm | 3840 | 2400 |
| (DIN EN ISO 527-3/1B/200) Die gemittelte Rauhtiefe $R_z$ wurde mit dem Gerät MAHR Perthometer bestimmt. | | |

Beispiel 3

In Beispiel 3 wurde dieselbe Schichtenfolge ABC wie in Beispiel 1 bei 250 °C coextrudiert und mit derselben Polypropylenschicht D (mit Kaseinfarbe mit Holzmaserungsmuster bedruckt und mit Primer versehen) unmittelbar anschließend, noch bei 230 °C und einer Linienlast von 14,5 kN/m (145 N/cm) unter Verwendung einer glatten Walze schmelzekaschiert. Das erhaltene Dekorlaminat wurde auf Raumtemperatur abgekühlt und in einem nachfolgenden Schritt wieder auf 125 °C aufgeheizt und bei dieser Temperatur unter Verwendung derselben Prägewalze wie in Beispiel 1 mit derselben Linienlast ein plastisches Holzmaserungs-Muster aufgeprägt, um ein strukturiertes Dekorlaminat zu erhalten.

Nach Erkalten wurde der Prägetiefeindex $I_P$ bestimmt. Hierzu wurden die jeweiligen Rauhigkeiten des erfindungsgemäß schmelzegeprägten Beispiels 1 und des nachträglich geprägten Beispiels 3 an fünf jeweils übereinstimmenden Stellen in der Prägung gemessen. Bereits vor Temperaturlagerung waren deutliche Unterschiede in der Rauhigkeit und im Prägetiefeindex Ip meßbar (Tabelle 2).

Die strukturierten Dekorlaminate wurden daraufhin bei 135 °C 30 min. im Heizofen gelagert und anschließend optisch begutachtet, und der Prägetiefeindex wurde erneut bestimmt. Während bei der schmelzegeprägten Probe (Beispiel 1) die aufgeprägte Struktur noch sichtbar war, war bei der nachträglich geprägten Probe bereits keinerlei Prägung mehr erkennbar. Wiederum wurde zur Bestimmung des Prägetiefeindexes Ip die Rauhigkeit an fünf jeweils übereinstimmenden Stellen in der Prägung gemessen (Tabelle 2).

Die Schichtverbundfolien wurden mit Spanplatte/Hotmeltverklebung kaschiert und getestet. Die erfindungsgemäßen Schichtverbünde wiesen auch in Bezug auf Kratzfestigkeit (DIN 438-2), Scheuerbeständigkeit, sowie Fleckenunempfindlichkeit (DIN 438-2) durchweg gute bis sehr gute Ergebnisse auf.

Tabelle 2:

| | Ohne Temperaturlagerung | | | | Nach 30 Min. Temperaturlagerung bei 135 °C | | | |
|---|---|---|---|---|---|---|---|---|
| | Sichtseite $R_Z$ [$\mu$m] | Substratseite $R_Z$ [$\mu$m] | Prägetiefeindex $I_P$ | Aussehen | Sichtseite $R_Z$ [$\mu$m] | Substratseite $R_Z$ [$\mu$m] | Prägetiefeindex $I_P$ | Aussehen |
| Bsp. 1 | 96,93 | 13,88 | 16,62 | deutliche Prägung, leicht matt, natürliches Aussehen | 47,52 | 8,35 | 13,55 | deutliche Prägung, matt glänzend, natürliches Aussehen |
| Bsp. 3 | 80,96 | 29,88 | 6,45 | schwache Prägung, leichte Glanzpunkte | 5,88 | 6,83 | 2,05 | Prägung nicht mehr sichtbar, glänzend |

Beispiel 4:

Es wurden die Rauhtiefen $R_Z$ von Dekorfolien mit dem Schichtaufbau der Beispiele 1 und 3, die einerseits analog Beispiel 1 erfindungsgemäß schmelzegeprägt oder analog Beispiel 3 mit denselben Prägewalzen nachträglich geprägt wurden, mit den Rauhtiefen $R_Z$ der eingesetzten Prägewalzen mit Holzmaserungsmuster (Holz) bzw. Ledermaserungsmuster (Leder) in Beziehung gesetzt. Tabelle 3 gibt die erhaltenen Abprägeverhältnisse wieder. Es wurde beim nachträglichen Prägen immer ein Wert von weniger als 75 % erzielt, während beim Schmelzeprägen Werte von über 80 % erzielt wurden.

Tabelle 3:

|  | Schmelzegeprägt | | Nachträglich geprägt | |
|---|---|---|---|---|
|  | Holz | Leder | Holz | Leder |
| $R_Z$ Walze [$\mu$m] | 120 | 110 | 120 | 110 |
| $R_Z$ Folie[$\mu$m] | 96,93 | 106,66 | 80,96 | 80,18 |
| Abprägeverhältnis | 81% | 97% | 67% | 73% |

## Patentansprüche

1.  Dekorlaminat umfassend mindestens die folgenden unmittelbar aufeinanderfolgenden, miteinander haftend verbundenen Schichten A-B-C-D:

    A: sichtseitig eine Funktionsschicht umfassend ein oder mehrere Ionomere und optional einen oder mehrere in der Schicht dispergierte Füllstoffe und/oder Funktionsadditive;
    B: eine Polymerzwischenschicht umfassend ein Gemisch aus 5 bis 95 Gew.-% extrudierbarem Ionomer, extrudierbarem Ionomergemisch oder extrudierbarem Ionomer-Blend und 95 bis 5 Gew.% eines Polyolefins;
    C: Haftvermittlerschicht umfassend einen oder mehrere modifizierte Kunststoffe zur Haftvermittlung;
    D: substratseitig eine dekortragende Schicht,

    **dadurch gekennzeichnet, daß** der Schichtenverbund aus den Schichten A, B und C coextrudiert wird und bei einer Temperatur oberhalb der Schmelztemperatur des Schichtenverbunds mit der substratseitigen dekortragenden Schicht schmelzekaschiert wird.

2.  Dekorlaminat nach Anspruch 1, **dadurch gekennzeichnet, daß** während der Schmelzekaschierung gleichzeitig im selben Schritt dem Dekorlaminat auf der Sichtseite ein oder mehrere Muster plastisch aufgeprägt werden.

3.  Dekorlaminat nach einem der Ansprüche 1 bis 2, **dadurch gekennzeichnet, daß** sie frei von PVC und/oder Melaminharz ist.

4.  Dekorlaminat nach einem der Ansprüche 1 bis 3, **dadurch gekennzeichnet, daß** die Funktionsschichtschicht A und die Zwischenschicht B dasselbe Ionomer oder Ionomergemisch umfassen.

5.  Dekorlaminat nach einem der Ansprüche 1 bis 4, **dadurch gekennzeichnet, daß** das Polyolefin der Polymerzwischenschicht B ausgewählt ist aus Polyethylen und Polypropylen sowie deren Gemischen.

6.  Dekorlaminat nach einem der Ansprüche 1 bis 5, **dadurch gekennzeichnet, daß** der oder die modifizierte(n) Kunststoff(e) zur Haftvermittlung ein oder mehrere mit Maleinsäureanhydrid, alkyliertem Maleinsäureanhydrid und/oder Carbonsäure modifizierte(s) Polymer(e), umfasst/umfassen, insbesondere ein oder mehrere Copolymer(e) oder gepfropfte (Co-)Polymere von Carbonsäurefunktionalität tragenden Monomeren, insbesondere Maleinsäureanhydrid und/oder alkyliertem Maleinsäureanhydrid mit Polypropylen, Polyethylen, Ethyl-Vinylacetat (EVA), Ethylen-Butyl-Acrylat (EBA), Ethylen-Acrylsäure (EAA), Ethylen-Methacrylsäure (EMAA), Maleinsäureacetat (MAH) und/oder Polyacrylat-Kautschuk (ACM) umfasst.

7.  Dekorlaminat nach einem der Ansprüche 1 bis 6, **dadurch gekennzeichnet, daß** die dekortragende Schicht D ein extrudierbares thermoplastisches Polymer enthält, ausgewählt aus der Gruppe bestehend aus Polyethylenen, Po

lypropylenen und Polybutylenen, Polystyrol, Polyamid, Polyester, sowie deren Gemischen.

8. Dekorlaminat nach einem der Ansprüche 1 bis 7, **dadurch gekennzeichnet, daß** die Funktionsschicht A eine Dicke im Bereich von 1 bis 200 $\mu$m, vorzugsweise 5 bis 100 $\mu$m; und/oder

die Polymerzwischenschicht B eine Dicke im Bereich von 10 bis 500 $\mu$m, vorzugsweise 40 bis 300 $\mu$m, insbesondere 100 bis 280 $\mu$m; und/oder

die Haftvermittlerschicht C eine Dicke im Bereich von 1 bis 100 $\mu$m, vorzugsweise 5 bis 30 $\mu$m, insbesondere 10 bis 25 $\mu$m; und/oder

die substratseitige dekortragende Schicht D eine Dicke von 10 bis 500 $\mu$m, vorzugsweise 50 bis 150 $\mu$m aufweist.

9. Verwendung eines Dekorlaminats gemäß einem der Ansprüche 1 bis 8 als Bodenbelag oder in der Herstellung eines Bodenbelags, als Wand- oder Dachpaneele oder in der Herstellung von Wand- oder Dachpaneelen, als Möbelfolie, insbesondere in der Herstellung von Sperrholz- oder Spanplatten, als 3D-Folie, insbesondere in der Herstellung von Türen und Möbeln und/oder als graphische Folie, insbesondere Druckfolie.

10. Schichtkörper umfassend ein Dekorlaminat gemäß einem der Ansprüche 1 bis 8 als Fußbodenbelag, Möbelfolie oder 3D-Folie.

11. Fußbodenbelag gemäß Anspruch 10, **dadurch gekennzeichnet, daß** er mindestens eine weitere, an Schicht D anschließende Substratschicht E aufweist, die mit Schicht D unmittelbar, über eine Haft- oder Klebeschicht, durch Kaschierung oder durch mechanische Verbindungselemente verbunden ist, wobei die Substratschicht E bevorzugt eine der folgenden Schichten umfasst: Rutschverhindererschicht, Wärmedämmschicht, Schall-, insbesondere Trittschalldämpfschicht, Wärmeleitschicht, Klebeschicht, Sperrholz- oder Spanplattenschicht, Wood-Plastic-Composite (WPC)-Schicht, Faserbetonschicht.

12. Verfahren zur Herstellung eines Dekorlaminats nach einem der Ansprüche 1 bis 8, **dadurch gekennzeichnet, daß** in einem ersten Schritt der Schichtenverbund aus wenigstens den Schichten A, B und C coextrudiert wird und dieser Schichtenverbund im zweiten Schritt bei einer Temperatur oberhalb der Schmelztemperatur des Schichtenverbunds mit der dekortragenden Schicht D schmelzekaschiert wird.

13. Verfahren nach Anspruch 12, **dadurch gekennzeichnet, daß** während der Schmelzekaschierung gleichzeitig im selben Schritt dem Dekorlaminat auf der Sichtseite ein oder mehrere Muster plastisch aufgeprägt werden, wobei die Temperatur des Schichtenverbunds zwischen dem ersten und dem zweiten Verfahrensschritt nicht unter die Schmelztemperatur des Schichtenverbunds A-B-C sinkt.

14. Verfahren nach Anspruch 13, **dadurch gekennzeichnet, daß** der zweite Verfahrensschritt bei einer Temperatur von 150-300 °C ausgeführt wird.

**Claims**

1. A decorative laminate, comprising at least the following immediately consecutive and mutually bonded layers A-B-C-D:

A: on the visible side, a functional layer comprising one or more ionomers and optionally one or more filler materials and/or functional additives dispersed in the layer;
B: an intermediate polymer layer comprising a mixture consisting of 5 to 95% by weight of extrudable ionomer, extrudable ionomer mixture or extrudable ionomer blend and 95 to 5% by weight of a polyolefin;
C: a tie layer comprising one or more modified plastics for the tie;
D: on the substrate side, a decorative layer;

**characterised in that** the layered composite consisting of the layers A, B and C is coextruded and hot-melt laminated with the substrate-side decorative layer at a temperature above the fusion temperature of the layered composite.

2. The decorative laminate according to Claim 1, **characterised in that** one or more patterns is/are plastically embossed on the visible side of the decorative laminate simultaneously in the same step, during hot-melt laminating.

3. The decorative laminate according to any one of Claims 1 to 2, **characterised in that** it contains no PVC and/or melamine resin.

4. The decorative laminate according to any one of Claims 1 to 3, **characterised in that** the functional layer A and the intermediate layer B comprise the same ionomer or ionomer mixture.

5. The decorative laminate according to any one of Claims 1 to 4, **characterised in that** the polyolefin of the intermediate polymer layer B is selected from polyethylene and polypropylene and mixtures of the same.

6. The decorative laminate according to any one of Claims 1 to 5, **characterised in that** the modified plastic(s) for the tie comprise(s) one or more polymer(s) modified with maleic anhydride, alkylated maleic anhydride and/or carboxylic acid, in particular one or more copolymer(s) or grafted (co)polymers of monomers bearing carboxylic acid functionality, in particular maleic anhydride and/or alkylated maleic anhydride with polypropylene, polyethylene, ethyl-vinyl acetate (EVA), ethylene-butyl acrylate (EBA), ethylene-acrylic acid (EAA), ethylene-methacrylic acid (EMAA), maleic acetate (MAH) and/or polyacrylate rubber (ACM).

7. The decorative laminate according to any one of Claims 1 to 6, **characterised in that** the decorative layer D contains an extrudable thermoplastic polymer selected from the group consisting of polyethylenes, polypropylenes and polybutylenes, polystyrene, polyamide, polyester and mixtures of the same.

8. The decorative laminate according to any one of Claims 1 to 7, **characterised in that** the functional layer A exhibits a thickness in the range of 1 to 200 $\mu$m, preferably 5 to 100 $\mu$m; and/or
the intermediate polymer layer B exhibits a thickness in the range of 10 to 500 $\mu$m, preferably 40 to 300 $\mu$m, in particular 100 to 280 $\mu$m; and/or
the tie layer C exhibits a thickness in the range of 1 to 100 $\mu$m, preferably 5 to 30 $\mu$m, in particular 10 to 25 $\mu$m; and/or
the substrate-side decorative layer D exhibits a thickness of 10 to 500 $\mu$m, preferably 50 to 150 $\mu$m.

9. The use of a decorative laminate in accordance with any one of Claims 1 to 8 as a floor covering or in the manufacture of a floor covering, as wall panels or roof panels or in the manufacture of wall panels or roof panels, as furniture film, in particular in the manufacture of plywood board or chipboard, as a 3D film, in particular in the manufacture of doors and furniture and/or as a graphic film, in particular a printed film.

10. A layered body comprising a decorative laminate in accordance with any one of Claims 1 to 8 as a floor covering, furniture film or 3D film.

11. The floor covering according to Claim 10, **characterised in that** it comprises at least one other layer E which is a substrate layer which adjoins the layer D and is connected to the layer D directly, via a bonding layer or adhesive layer, by lamination or by mechanical connecting elements, wherein the substrate layer E preferably comprises one of the following layers: a layer which prevents slipping, a heat-insulating layer, a sound-absorbing and in particular impact sound-absorbing layer, a heat-conducting layer, an adhesive layer, a plywood layer or chipboard layer, a wood-plastic composite (WPC) layer and a fibre-reinforced concrete layer.

12. A method for manufacturing a decorative laminate according to any one of Claims 1 to 8, **characterised in that** the layered composite consisting of at least the layers A, B and C is coextruded in a first step and hot-melt laminated with the decorative layer D at a temperature above the fusion temperature of the layered composite in the second step.

13. The method according to Claim 12, **characterised in that** one or more patterns is/are plastically embossed on the visible side of the decorative laminate simultaneously in the same step, during hot-melt laminating, wherein the temperature of the layered composite does not drop below the fusion temperature of the layered composite A-B-C between the first and second method steps.

14. The method according to Claim 13, **characterised in that** the second method step is performed at a temperature of 150 to 300 °C.

**Revendications**

1. Stratifié décoratif comprenant au moins les couches A-B-C-D ci-après, immédiatement successives, liées les unes aux autres par adhérence :

A : côté visible, une couche fonctionnelle comprenant un ou plusieurs ionomères et en option un ou plusieurs additifs fonctionnels et/ou charges en dispersion dans la couche ;

B : une couche intermédiaire en polymère, comprenant un mélange de 5 à 95 % en poids d'un ionomère extrudable, d'un mélange d'ionomères extrudables ou d'un mélange mécanique d'ionomères extrudables et 95 à 5 % en poids d'une polyoléfine ;

C : une couche promotrice d'adhérence, comprenant un ou plusieurs plastiques modifiés destinés à promouvoir l'adhérence ;

D : côté substrat, une couche portant le décor,

**caractérisé en ce que** la combinaison de couches est co-extrudée à partir des couches A, B et C, et, à une température supérieure à la température de fusion de la combinaison de couches, est doublée à l'état fondu avec la couche portant le décor côté substrat.

2. Stratifié décoratif selon la revendication 1, **caractérisé en ce que**, pendant le doublage à l'état fondu, on imprime simultanément en trois dimensions, dans la même étape, un ou plusieurs modèles sur le côté visible du stratifié décoratif.

3. Stratifié décoratif selon l'une des revendications 1 à 2, **caractérisé en ce qu'**il est exempt de PVC et/ou d'une résine de mélamine.

4. Stratifié décoratif selon l'une des revendications 1 à 3, **caractérisé en ce que** la couche fonctionnelle A et la couche intermédiaire B comprennent le même ionomère ou le même mélange d'ionomères.

5. Stratifié décoratif selon l'une des revendications 1 à 4, **caractérisé en ce que** la polyoléfine de la couche intermédiaire en polymère B est choisie parmi le polyéthylène et le polypropylène, ainsi que les mélanges de ceux-ci.

6. Stratifié décoratif selon l'une des revendications 1 à 5, **caractérisé en ce que** le ou les plastiques modifiés destinés à promouvoir l'adhérence comprennent un ou plusieurs polymères modifiés par de l'anhydride maléique, de l'anhydride maléique alkylé et/ou un acide carboxylique, en particulier comprennent un ou plusieurs copolymères ou (co)polymères greffés de monomères portant une fonctionnalité acide carboxylique, en particulier d'anhydride maléique et/ou d'anhydride maléique alkylé avec du polypropylène, du polyéthylène, de l'éthylène-acétate de vinyle (EVA), de l'éthylène-acétate de butyle (EBA), de l'éthylène-acide acrylique (EAA), de l'éthylène-acide méthacrylique (EMAA), de l'acide maléique-acétate (MAH) et/ou du caoutchouc de polyacrylate (ACM).

7. Stratifié décoratif selon l'une des revendications 1 à 6, **caractérisé en ce que** la couche D portant le décor contient un polymère thermoplastique extrudable choisi dans le groupe consistant en les polyéthylènes, les polypropylènes et les polybutylènes, le polystyrène, le polyamide, le polyester, ainsi que les mélanges de ceux-ci.

8. Stratifié décoratif selon l'une des revendications 1 à 7, **caractérisé en ce que** la couche fonctionnelle A présente une épaisseur comprise dans la plage de 1 à 200 $\mu$m, de préférence de 5 à 100 $\mu$m ; et/ou

   **que** la couche intermédiaire en polymère B présente une épaisseur comprise dans la plage de 10 à 500 $\mu$m, de préférence de 40 à 300 $\mu$m, en particulier de 100 à 280 $\mu$m ; et/ou

   **que** la couche promotrice d'adhérence C présente une épaisseur comprise dans la plage de 1 à 100 $\mu$m, de préférence de 5 à 30 $\mu$m, en particulier de 10 à 25 $\mu$m ; et/ou

   **que** la couche portant le décor côté substrat présente une épaisseur de 10 à 500 $\mu$m, de préférence de 50 à 150 $\mu$m.

9. Utilisation d'un stratifié décoratif selon l'une des revendications 1 à 8 en tant que revêtement de sol ou pour la fabrication d'un revêtement de sol, en tant que panneaux muraux ou de toit ou pour la fabrication de panneaux muraux ou de toit, en tant que film pour meubles, en particulier pour la fabrication de panneaux en contreplaqué ou de particules, en tant que feuille 3D, en particulier pour la fabrication de portes et de meubles, et/ou en tant que film graphique, en particulier pour impression.

10. Corps stratifié comprenant un stratifié décoratif selon l'une des revendications 1 à 8 en tant que revêtement de sol, film pour meubles ou feuille 3D.

11. Revêtement de sol selon la revendication 10, **caractérisé en ce qu'**il comprend au moins une couche formant substrat E supplémentaire, contiguë à la couche D, qui est directement liée à la couche D par l'intermédiaire d'une couche adhérente ou collante, par doublage ou grâce à des éléments de liaison mécaniques, la couche formant substrat E comprenant de préférence l'une des couches suivantes : couche anti-glissement, couche calorifuge, couche anti-bruit, en particulier contre les bruits de pas, couche conductrice de la chaleur, couche adhésive, couche de contreplaqué ou de panneau de particules, couche composite bois-plastique (WPC), couche de béton fibreux.

12. Procédé de fabrication d'un stratifié décoratif selon l'une des revendications 1 à 8, **caractérisé en ce que**, dans une première étape, on co-extrude la combinaison de couches à partir d'au moins les couches A, B et C, et, dans une deuxième étape, à une température supérieure à la température de fusion de la combinaison de couches, on double à l'état fondu cette combinaison de couches avec la couche portant le décor D.

13. Procédé selon la revendication 12, **caractérisé en ce que**, pendant le doublage à l'état fondu et simultanément, on imprime en trois dimensions dans la même étape, sur la face visible du stratifié décoratif, un ou plusieurs modèles, ce à l'occasion de quoi la température de la combinaison de couches ne va pas, entre la première et la deuxième étape du procédé, tomber en-dessous de la température de fusion de la combinaison de couches A, B, C.

14. Procédé selon la revendication 13, **caractérisé en ce que** la deuxième étape du procédé est mise en oeuvre à une température de 150 à 300 °C.

Fig.1

Fig.2

Fig.3

Fig.4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9508593 A1
- DE 4107150 A1
- DE 102012103016 A1
- CN 204566851 U
- WO 2012001109 A1